# EUROPÄISCHE PATENTSCHRIFT

(11) **EP 3 056 677 B1**
(45) Veröffentlichungstag und Bekanntmachung des Hinweises auf die Patenterteilung: **04.09.2019**
(21) Anmeldenummer: 15154834.4
(22) Anmeldetag: 12.02.2015
(51) Int. Cl.: F01D 5/22, F01D 5/20

(54) **Schaufel und Strömungsmaschine**
Blade and flow engine
Aube et turbomachine

(43) Veröffentlichungstag der Anmeldung: 17.08.2016
(73) Patentinhaber: MTU Aero Engines AG, 80995 München (DE)
(72) Erfinder: Kozdras, Marcin, 38-400 Krosno (PL); Skura, Krzysztof, 36-110 Majdan Krolewski (PL); Lebiedowicz, Piotr, 22-500 Hrubieszow (PL); Szponar, Marek, 23-415 Ksiezpol (PL)

(56) Entgegenhaltungen:
- EP-A1- 2 402 559
- EP-A2- 1 890 008
- WO-A1-2014/137479
- DE-A1-102009 030 566
- JP-A- 2005 207 294
- US-A1- 2013 259 699

## Beschreibung

Die Erfindung betrifft eine Schaufel für eine Strömungsmaschine nach dem Oberbegriff des Patentanspruchs 1 und eine Strömungsmaschine.

Schaufeln von Strömungsmaschinen wie Gasturbinen, Flugtriebwerken, Dampfturbinen und dergleichen haben häufig an ihren Blattspitzen ein Deckband bzw. ein sogenanntes Außendeckband. Im montierten Zustand der Schaufeln liegen die Deckbänder gegenseitig aneinander an. Durch die gegenseitige Anlage werden die Schaufeln blattspitzenseitig bzw. bezogen auf eine Rotordrehachse radial außen abgestützt, was eine Schwingungsdämpfung bewirkt. Zudem wird durch die Deckbänder einer äußeren Umströmung der Schaufeln entgegengewirkt. Zur Vermeidung von Verformungen der eher dünnwandigen Deckbänder aufgrund von hohen thermischen und mechanischen Belastungen sind diese häufig über eine Versteifungsstruktur im Bereich ihrer Oberfläche versteift. Durch eine grundsätzliche Verdickung der Deckbänder über ihren gesamten Querschnitt können in die Deckbänder beispielsweise nachteilige thermische Spannungen eingeleitet werden. Eine alternative Maßnahme sieht daher zur Versteifung der Deckbänder vor, außenflächenseitig bzw. oberflächenseitig eine Versteifungsstruktur mit kreuzförmig zueinander angeordneten Rippen vorzusehen. Ein derartig versteiftes Deckband ist beispielsweise in der DE 10 2009 030 566 A1 der Anmelderin gezeigt. Weitere bekannte Außendeckbänder bzw. Schaufeln von Strömungsmaschinen mit Außendeckbändern sind beispielsweise in der WO 2013/107982 A1, JP 2005207294 A und in der EP 2 402 559 A1 gezeigt.

Aufgabe der Erfindung ist es, eine Schaufel für eine Strömungsmaschine zu schaffen, deren Außendeckband bei einem reduzierten Gewicht hochbelastbar ist. Des Weiteren ist es Aufgabe der Erfindung, ein leichtes und hochbelastbares Deckband für eine derartige Schaufel und eine Strömungsmaschine mit einem optimierten Rotorschwingungsverhalten zu schaffen.

Diese Aufgabe wird gelöst, durch eine Schaufel mit den Merkmalen des Patentanspruchs 1, und durch eine Strömungsmaschine mit den Merkmalen des Patentanspruchs 8.

Eine erfindungsgemäße Schaufel, insbesondere Laufschaufel, einer Strömungsmaschine, wie eine stationäre Gasturbine, ein Flugtriebwerk und dergleichen, hat ein Deckband, insbesondere Außendeckband, das blattspitzenseitig an der Schaufel positioniert ist und im Bereich seiner Oberfläche, insbesondere Außenoberfläche, mittels einer Versteifungsstruktur versteift ist. Die Versteifungsstruktur hat zumindest eine Rippe. Erfindungsgemäß weist die zumindest eine Rippe in Umfangsrichtung eine variierende Höhe auf.

Durch die variierende Höhe der Rippe in Umfangsrichtung kann das Deckband optimal versteift werden, da die auf das Deckband wirkende Belastung quasi punktuell berücksichtigt werden kann. Hierdurch kann die gesamte Struktur des Deckbands in Leichtbauweise bei optimierter Gewichtsverteilung ausgeführt werden, was dem Deckband hochbelastbare Eigenschaften verleiht.

Unter "variabler Höhe der Rippe in Umfangsrichtung" wird im Zusammenhang der vorliegenden Erfindung verstanden, dass der radiale Abstand der radial äußeren Oberfläche der Rippe zur Drehachse der Turbomaschine in Umfangsrichtung variiert. Im Gegensatz hierzu weist die nach radial innen gerichtete Oberfläche des Deckbandes, welche mit dem Schaufelblatt verbunden ist, vorzugsweise im Bereich der Rippe und entlang der Umfangsrichtung im Wesentlichen überall denselben radialen Abstand zur Drehachse der Turbomaschine auf, wobei der Übergang von Deckband zu Schaufelblatt mit einem konstanten oder variablen Übergangsradius versehen sein kann.

Gemäß der vorliegenden Erfindung ist unter der Versteifungsstruktur keine Dichtrippe zu verstehen, d.h. keine Struktur, die im ordnungsgemäßen Einsatz der Laufschaufel dazu bestimmt ist, mit einem statorseitigen Dichtelement, wie zum Beispiel einer Honigwabe, zusammenzuwirken, um die Dichtigkeit zwischen Laufschaufelspitze und der diese umgebende Statorstruktur zu erhöhen. Sofern das Deckband der erfindungsgemäßen Schaufel ferner noch wenigstens eine Dichtrippe aufweist, wird diese wenigstens eine Dichtrippe in der Regel einen größeren radialen Abstand zur Drehachse der Strömungsmaschine aufweisen als der größte radiale Abstand der Außenoberfläche der Rippe zur Drehachse.

Bei einem Ausführungsbeispiel hat die zumindest eine Rippe sowohl zumindest einen Abschnitt mit einer variierenden Höhe als auch zumindest einen Abschnitt mit einer im Wesentlichen oder exakt konstanten Höhe. Hierdurch ist nur eine abschnittsweise Erhöhung der Rippe erforderlich, was sich fertigungstechnisch vorteilhaft auswirkt.

Bei einem alternativen Ausführungsbeispiel hat die zumindest eine Rippe über ihre gesamte Länge eine variierende Höhe. Hierdurch ist eine größtmögliche Variabilität der Rippe bzgl. ihrer Höhe gegeben.

Bei einem bevorzugten Ausführungsbeispiel hat die zumindest eine Rippe einen höchsten Abschnitt, der sich in radialer Verlängerung des Schaufelblattes befindet. Durch diese Maßnahme wird das Gewicht des Deckbands durch die Erhöhung der Rippe in dem Bereich gesteigert, in dem das Deckband an dem Schaufelblatt angebunden ist. Ungleiche Massenverteilungen des Deckbandes bezogen auf seinen Anbindungsbereich, wodurch Spannungen in das Deckband selbst und in das Schaufelblatt eingeleitet werden könnten, lassen sich somit verhindern.

Zur weiteren Steigerung der Variabilität der Versteifungsstruktur kann die zumindest eine Rippe eine variierende Dicke haben.

Bevorzugterweise ist die Versteifungsstruktur im Wesentlichen Z-förmig bzw, im Wesentlichen "hundeknochenförmig" ausgeführt. Die Z- bzw. hundeknochenförmige Gestalt ermöglicht sowohl eine hohe Versteifung in Umfangsrichtung, als auch in Axialrichtung. Die zumindest eine Rippe kann hierzu in seitenbereichsseitige bzw. kontaktflächennahe Erhebungen der Versteifungsstruktur übergehen, die schräg zur Rippe angestellt sind, so dass sich in Draufsicht in etwa eine Z-Gestalt ergibt.

Vorzugsweise weist das Deckband der Schaufel an seinen Umfangsrändern, mit welchen im verbauten Zustand das Deckband in Umfangsrichtung benachbarte Deckbänder kontaktiert, eine im Wesentlichen Z-förmige Form auf. Man spricht daher auch von so genannten "Z-notches". Mit Hilfe dieser Form ist es möglich, eine Verspannung zwischen den Deckbändern von in Umfangsrichtung benachbarten Schaufeln und somit die eingangs erwähnte Dämpfungswirkung zwischen diesen Schaufeln zu erzielen. Die seitenbereichsseitigen bzw. kontaktflächennahen Erhebungen der Versteifungsstruktur erstrecken sich vorzugsweise jeweils über den gesamten mittleren Bereich der Z-Form des Deckbandes, d.h. über den mittleren Schenkel der Z-Form. Weiter bevorzugt erstrecken sich diese Erhebungen im Wesentlichen, d.h. plus maximal 15%, ausschließlich in dem mittleren Bereich der Z-Form.

Um einen belastungsorientierten Übergang der zumindest einen Rippe in die Erhebungen zu erreichen, ist es vorteilhaft, wenn die Rippe stufenlos in die Erhebungen übergeht. Die Erhebungen selbst können eine konstante Höhe oder eine variierende Höhe haben. Beispielsweise ist es vorstellbar, die Erhebungen plateauartig auszuführen oder keilförmig auslaufen zu lassen.

Bei einem Ausführungsbeispiel hat das Deckband zumindest einen sich in Umfangsrichtung erstreckenden Dichtsteg, der eine variierende Dicke und/oder einen variierenden Übergangsradius zum Deckband hat. Hierdurch wird der Dichtsteg zusätzlich zu seiner Dichtfunktion als quasi-Versteifungselement und trägt somit ebenfalls zur optimierten Versteifung des Deckbandes bei. Die Verdickung kann bezogen auf die Längsachse Dichtstegs sowohl einseitig als auch zweiseitig sein. Zur Vergleichmäßigung der Massenverteilung ist es vorteilhaft, wenn sich die Verdickung mittig bzw. in etwa mittig des Dichtstegs befindet.

Ein bevorzugtes Deckband für eine erfindungsgemäße Schaufel hat im Bereich seiner Oberfläche eine Versteifungsstruktur zur Versteifung, die zumindest eine Rippe hat, die in Umfangsrichtung eine variierende Höhe aufweist. Ein derartiges Deckband zeichnet bei einem reduzierten Gewicht durch eine verbesserte Belastbarkeit im Vergleich zu bekannten Deckbändern aus.

Eine bevorzugte Strömungsmaschine hat eine Vielzahl von erfindungsgemäßen Schaufeln. Insbesondere bilden die Schaufeln zumindest eine Schaufelreihe, was sich aufgrund ihres optimierten Schwingungsverhalten positiv auf das Schwingungsverhalten des Maschinenrotors auswirkt.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand schematischer Darstellungen näher erläutert. Es zeigen:
- Figur 1: eine Draufsicht auf eine erfindungsgemäße Schaufel im Bereich ihres Außendeckbandes, und
- Figur 2: einen Schnitt durch das Außendeckband entlang der Schnittlinie C-C.

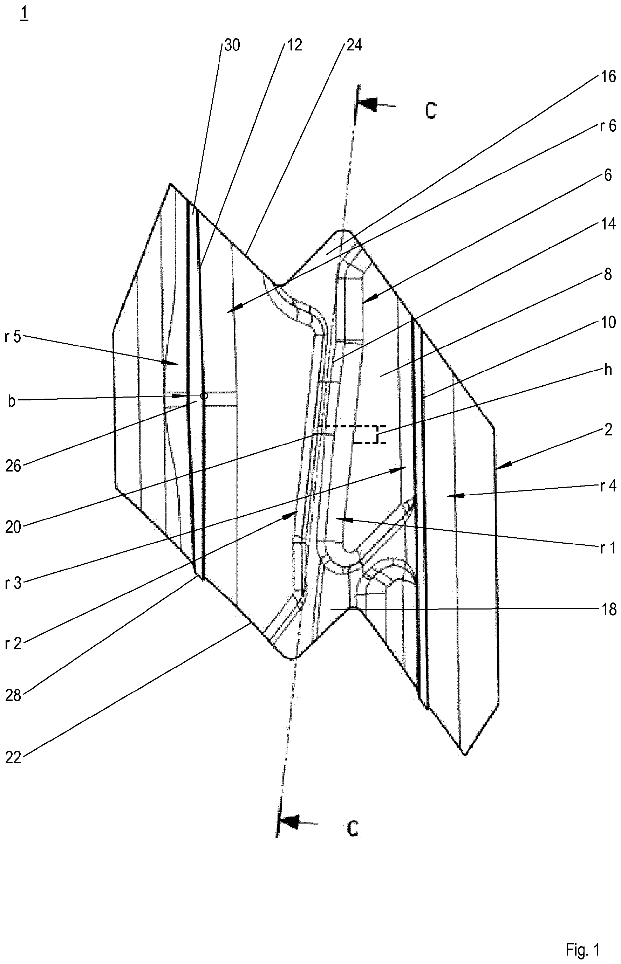

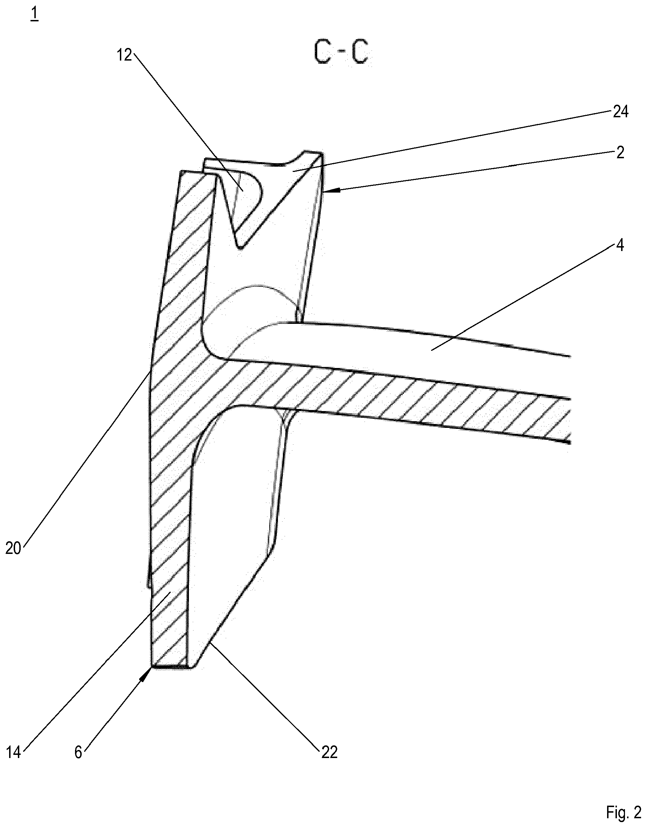

In Figur 1 ist eine Draufsicht auf eine erfindungsgemäße Schaufel 1 einer Strömungsmaschine wie ein Flugtriebwerk gezeigt. Die Schaufel 1 ist beispielsweise eine Laufschaufel und bildet mit einer Vielzahl gleichartiger Laufschaufeln eine Schaufelreihe eines Rotors der Strömungsmaschine. Insbesondere ist in Figur 1 eine Draufsicht auf ein erfindungsgemäßes Deckband 2 der Schaufel 1 gezeigt. Das Deckband 2 ist spitzenseitig an einem in Figur 2 angedeuteten Schaufelblatt 4 angeordnet und dementsprechend ein sogenanntes Außendeckband. Es ist plattenartig bzw. dünnwandig und über eine Versteifungsstruktur 6 versteift, die sich über eine von dem Schaufelblatt 4 abgewandte Oberfläche 8 des Deckbandes 2 zwischen dessen beiden Dichtstegen 10, 12 erstreckt. Die Versteifungsstruktur 6 hat in dem hier gezeigten Ausführungsbeispiel eine Rippe 14 und zwei Erhebungen 16, 18.

Die Rippe 14 erstreckt sich bezogen auf die Schaufelreihe bzw. auf eine Drehachse des Rotors in Umfangsrichtung bzw. nahezu in Umfangsrichtung und geht endseitig in die Erhebungen 16, 18 über. In der in Figur 1 gezeigten Draufsicht verläuft die Umfangsrichtung senkrecht bzw. nahezu parallel zur Schnittlinie CC. Die zumindest eine Rippe 14 hat eine stegartig Gestalt mit einer hier konstanten Dicke bzw. Breite und einer variierenden Höhe h in Umfangsrichtung. Wie in Figur 2 gezeigt, hat die Rippe 14 über ihre gesamte Länge eine variierende Höhe h, wobei ihr höchster Abschnitt 20 in radialer Verlängerung des Schaufelblattes 4 angeordnet ist. Von dem höchsten Abschnitt 20 aus betrachtet läuft die Rippe 14 geradlinig bzw. keilförmig in Richtung der Erhebungen 16, 18 aus. Von den Erhebungen 16, 18 aus betrachtet nimmt die Höhe h der Rippe 14 in Richtung ihres höchsten Abschnitts 20 stetig zu. Übergangsradien r1, r2 der Rippe 14 in die Oberfläche 8 bzw. von der Oberfläche 8 in die Rippe 14 sind hier über ihre Länge konstant.

Die Erhebungen 16, 18 der Versteifungsstruktur 6 sind seitenrandseitig angeordnet und bilden Abschnitte von Kontaktflächen 22 zur Anlage an Deckbändern von benachbarten Schaufeln 1. Sie haben eine im Wesentlichen konstante und einheitliche Höhe. Die Erhebungen 16, 18 haben eine im Wesentlichen sockelartige bzw. plateauartige Gestalt und sind derart schräg zur Rippe 14 angestellt, dass sich in Draufsicht eine Z-förmige bzw. nahezu Z-förmige Gestalt der Versteifungsstruktur 6 ergibt. Die Versteifungsstruktur 6 hat somit eine sogenannte "dogbone- bzw. hundeknochenartige Gestalt". Nicht bezifferte Übergangsradien der Erhebungen 16, 18 in die Oberfläche 8 bzw. von der Oberfläche 8 in die Erhebungen 16, 18 sind gleich den Übergangsradien r1, r2 der Rippe 14, so dass hier die Erhebungen 16, 18 und die Rippe 14 die gleichen Übergangsradien r1, r2 haben.

Die Dichtstege 10, 12 sind in Umfangsrichtung orientiert und laufen im Betrieb in statorseitige Dichtelemente wie Wabensegmente ein. Sie erstrecken sich von der einen Kontaktfläche 22 zur entgegengesetzten Kontaktfläche 24 und somit in Umfangsrichtung über das gesamte Deckband 2.

Der in der Figur 1 gezeigte rechte bzw. in Strömungsrichtung eines Primärstroms der Strömungsmaschine betrachtet hintere Dichtsteg 10 hat über seine gesamte Länge eine konstante Höhe, eine konstante Breite und konstante Übergangsradien r3, r4. Der von der Rippe 14 abgewandte Übergangsradius r4 ist hier größer als der der Rippe 12 zugewandte Übergangsradius r3 des hinteren Dichtstegs 10 ausgeführt.

Der in Figur 1 gezeigte linke bzw. in Strömungsrichtung betrachtet vordere Dichtsteg 12 hat bei einer konstanten Höhe über seine Länge eine variierende Breite b und zumindest einen über seine Länge variierenden Übergangsradius r5. Er hat eine Verdickung 26 etwa auf seiner halben Länge bzw. mittig des Deckbands 2. Die Verdickung des vorderen Dichtstegs 12 ist hier symmetrisch zu seiner Längsachse und somit beidseits gleichförmig ausgebildet. Von seinen Endabschnitten 28, 30 in Richtung der Verdickung 26 aus betrachtet nimmt die Breite b kontinuierlich zu. Zudem ist im Bereich der Verdickung 26 der von der Rippe 14 abgewandte Übergangsradius r5 vergrößert gegenüber benachbarten Übergängen. Ein der Rippe 14 zugewandter Übergangsradius r6 des vorderen Dichtstegs 12 ist konstant. Er ist gleich bzw. nahezu gleich dem von der Rippe 14 abgewandte Übergangsradius r4 des vorderen Dichtstegs 10. Grundsätzlich kann auch der hintere Dichtsteg 10 mit einer Verdickung 26 ausgebildet sein und/oder der vordere Dichtsteg 12 mit einer konstanten Breite b.

Nicht bezifferte Taschen zwischen der Rippe 14, den Erhebungen 16, 18 und den Dichtstegen 10, 12, sind radial außen über ihre gesamte Grundfläche und seitlich zu den Kontaktflächen 22, 24 geöffnet. In dem hier gezeigten Ausführungsbeispiel sind drei Taschen ausgebildet, wobei sich die Tasche, die sich entlang des vorderen Dichtstegs 12 erstreckt, von der einen Kontaktfläche 22 zur anderen Kontaktfläche 24 verläuft. Die beiden anderen Taschen, die sich entlang des hinteren Dichtstegs 10 erstrecken, sind über die Erhebung 16 bzw. einen in den hinteren Dichtsteg 10 übergehenden nicht bezifferten Arm voneinander getrennt.

Die Erfindung schafft eine Strömungsmaschinenschaufel mit einem Deckband bzw. Außendeckband 2 bzw. ein Außendeckband 2 für eine Schaufel einer Strömungsmaschine, dessen Versteifungsstruktur 6 in Umfangsrichtung betrachtet im Bereich der Kontaktflächen 22, 24 niedrig und in einem Zwischenbereich hoch ausgebildet ist. Hierdurch wird das Gewicht des Deckbandes 2 in seinen seitlichen Überhangbereichen reduziert bzw. in einem mittleren Bereich konzentriert, was sich vorteilhaft auf die mechanische und thermische Belastbarkeit des Deckbandes 2 bzw. der Schaufel 1 auswirkt. Dabei wirkt zumindest der vorderen Dichtsteg 12 neben seiner Dichtfunktion durch die Verdickung 26 und den variierenden Verlauf des Übergangsradius r5 als ein Teil der Versteifungsstruktur 6 und somit als ein quasi-Versteifungselement.

Offenbart ist eine Schaufel einer Strömungsmaschine mit einem Außendeckband, das blattspitzenseitig an der Schaufel positioniert ist und im Bereich seiner vom Ringraum abgewandten Oberfläche mittels einer Versteifungsstruktur versteift ist, die zumindest ein längliches Versteifungselement wie eine Rippe hat, wobei das längliche Versteifungselement in Umfangsrichtung eine variierende Höhe aufweist, ein Außendeckband für eine derartige Schaufel, sowie eine Strömungsmaschine mit zumindest einer derartigen Schaufel.

### Bezugszeichenliste

- 1: Schaufel
- 2: Deckband / Außendeckband
- 4: Schaufelblatt
- 6: Versteifungsstruktur
- 8: Oberfläche
- 10: Dichtsteg
- 12: Dichtsteg
- 14: Rippe
- 16: Erhebung
- 18: Erhebung
- 20: höchster Abschnitt
- 22: Kontaktfläche
- 24: Kontaktfläche
- 26: Verdickung
- 28: Endabschnitt
- 30: Endabschnitt

- h: Höhe der Rippe
- b: Breite vorderer Dichtsteg
- r1: Übergangsradius der Rippe
- r2: Übergangsradius der Rippe
- r3: Übergangsradius hinterer Dichtsteg
- r4: Übergangsradius hinterer Dichtsteg
- r5: Übergangsradius vorderer Dichtsteg
- r6: Übergangsradius vorderer Dichtsteg

## Patentansprüche

1. Schaufel (1) einer Strömungsmaschine mit einem Deckband (2), das blattspitzenseitig an der Schaufel (1) positioniert ist und im Bereich seiner Oberfläche (8) mittels einer Versteifungsstruktur (6) versteift ist, die zumindest eine sich in Umfangsrichtung erstreckende Rippe (14) hat, die in Umfangsrichtung eine variierende Höhe (h) aufweist, **dadurch gekennzeichnet, dass** die Rippe (14) einen höchsten Abschnitt (20) hat, der sich in Verlängerung des Schaufelblattes (4) befindet.

2. Schaufel nach Patentanspruch 1, wobei die Rippe (14) sowohl zumindest einen Abschnitt (20) mit einer variierenden Höhe (h) als auch zumindest einen Abschnitt mit einer konstanten Höhe hat.

3. Schaufel nach Patentanspruch 1, wobei die Rippe (14) über ihre gesamte Länge eine variierende Höhe (h) hat.

4. Schaufel nach einem der vorhergehenden Patentansprüche, wobei die Rippe (14) eine variierende Dicke aufweist.

5. Schaufel nach einem der vorhergehenden Patentansprüche, wobei die Rippe (14) in randseitige Erhebungen (16, 18) der Versteifungsstruktur (6) übergeht, die schräg zur Rippe (14) angestellt sind.

6. Schaufel nach Patentanspruch 6, wobei die Rippe (14) stufenlos in die Erhebungen (16, 18) übergeht.

7. Schaufel nach einem der vorhergehenden Patentansprüche, wobei das Deckband (2) zumindest einen sich in Umfangsrichtung erstreckenden Dichtsteg (10, 12) mit einer variierenden Dicke (b) und/oder einen variierenden Übergangsradius (r3, r4, r5, r6) zum Deckband (2) hat.

8. Strömungsmaschine mit einer Vielzahl von Schaufeln (1) nach einem der Patentansprüche 1 bis 7.

## Claims

1. Blade (1) for a turbomachine, said blade comprising a shroud (2) which is positioned on a blade tip side of the blade (1) and is stiffened in the region of its surface (8) by means of a stiffening structure (6) which comprises at least one rib (14) that extends in the circumferential direction and has a varying height (h) in the circumferential direction, **characterized in that** the rib (14) has a highest portion (20) which is located in an extension of the airfoil (4).

2. Blade according to claim 1, wherein the rib (14) has both at least one portion (20) of varying height (h) and at least one portion of constant height.

3. Blade according to claim 1, wherein the height (h) of the rib (14) varies over its entire length.

4. Blade according to any of the preceding claims, wherein the rib (14) has a varying thickness.

5. Blade according to any of the preceding claims, wherein the rib (14) transitions into raised edge regions (16, 18) of the stiffening structure (6), which are inclined obliquely with respect to the rib (14).

6. Blade according to claim 6, wherein the rib (14) transitions smoothly into the raised regions (16, 18).

7. Blade according to any of the preceding claims, wherein the shroud (2) comprises at least one circumferentially extending sealing ridge (10, 12) of varying thickness (b) and/or varying transition radius (r3, r4, r5, r6) to the shroud (2).

8. Turbomachine comprising a plurality of blades (1) according to any of claims 1 to 7.

## Revendications

1. Aube (1) d'une turbomachine comportant une bande de recouvrement (2) qui est positionnée du côté de l'extrémité de la pale d'aube (1) et raidie dans la zone de sa surface (8) au moyen d'une structure de raidissement (6), laquelle structure de raidissement présente au moins une nervure (14) s'étendant dans la direction circonférentielle et ayant une hauteur (h) variable dans la direction circonférentielle, **caractérisée en ce que** la nervure (14) présente une section supérieure (20) qui se situe dans le prolongement de la pale d'aube (4).

2. Aube selon la revendication 1, dans laquelle la nervure (14) comporte à la fois au moins une section (20) ayant une hauteur (h) variable et au moins une section ayant une hauteur constante.

3. Aube selon la revendication 1, dans laquelle la nervure (14) a une hauteur (h) variable sur toute sa longueur.

4. Aube selon l'une des revendications précédentes, dans laquelle la nervure (14) a une épaisseur variable.

5. Aube selon l'une des revendications précédentes, dans laquelle la nervure (14) se prolonge dans des élévations (16, 18) du bord de la structure de raidissement (6), lesquelles élévations sont disposées de manière oblique par rapport à la nervure (14).

6. Aube selon la revendication 6, dans laquelle la nervure (14) se prolonge en continu dans les élévations (16, 18).

7. Aube selon l'une des revendications précédentes, dans laquelle la bande de recouvrement (2) présente au moins une barrette d'étanchéité (10, 12) s'étendant dans la direction circonférentielle et ayant une épaisseur (b) et/ou un rayon de transition (r3, r4, r5, r6) variable vers la bande de recouvrement (2).

8. Turbomachine comportant une pluralité d'aubes (1) selon l'une des revendications 1 à 7.
